# EUROPÄISCHE PATENTSCHRIFT

(11) **EP 1 303 690 B1**
(45) Veröffentlichungstag und Bekanntmachung des Hinweises auf die Patenterteilung: **21.04.2004**
(21) Anmeldenummer: 01964952.4
(22) Anmeldetag: 29.05.2001
(51) Int. Cl.: F02D 41/02, F01N 11/00

(54) **VERFAHREN ZUR ADAPTION EINES KATALYSATORTEMPERATUR-SOLLBEREICHS FÜR EINEN NO X?-SPEICHERKATALYSATOR**
METHOD FOR ADAPTING A REQUIRED CATALYST TEMPERATURE RANGE FOR A NO X? STORAGE CATALYST
PROCEDE D'ADAPTATION D'UNE GAMME DE TEMPERATURE DE CONSIGNE DE CATALYSEUR POUR UN CATALYSEUR A ACCUMULATEUR DE NO X?

(30) Priorität: 13.07.2000 DE 10034143
(43) Veröffentlichungstag der Anmeldung: 23.04.2003
(73) Patentinhaber: Volkswagen Aktiengesellschaft, 38436 Wolfsburg (DE)
(72) Erfinder: POTT, Ekkehard, 38518 Gifhorn (DE); HAHN, Hermann, 30175 Hannover (DE)
(86) Internationale Anmeldenummer: PCT/EP2001/006099
(87) Internationale Veröffentlichungsnummer: WO 2002/006654

(56) Entgegenhaltungen:
- EP-A- 0 867 604
- EP-A- 0 928 890
- EP-A- 0 997 626
- US-A- 5 722 236

## Beschreibung

Die Erfindung betrifft ein Verfahren zur Adaption eines Katalysatortemperatur-Sollbereichs für einen im Abgasstrang einer Verbrennungskraftmaschine angeordneten und mit einem mageren Abgas beaufschlagten NOₓ-Speicherkatalysator.

Zur Reinigung eines Abgases von Verbrennungskraftmaschinen ist es bekannt, im Abgasstrang derselben Katalysatorsysteme anzuordnen, die die Schadstoffkomponenten des Abgases in weniger umweltrelevante Produkte zersetzen. Handelt es sich bei den Schadstoffkomponenten um Reduktionsmittel wie Kohlenmonoxid CO oder unvollständig verbrannte Kohlenwasserstoffe, so können diese, sofern ausreichend Sauerstoff vorhanden ist, in sogenannten Oxidationskatalysatoren zu Kohlendioxid und Wasser aufoxidiert werden. Weiterhin ist es bekannt, während des Verbrennungsprozesses gebildete Stickoxide NOₓ mit Hilfe der Reduktionsmittel wieder zu Stickstoff umzusetzen. Dazu sind Reduktionskatalysatoren entwickelt worden, die, sofern die Reduktionsmittel in einem ausreichenden Maße zur Verfügung gestellt werden, eine nahezu vollständige Umsetzung des NOₓ erlauben.

Ein Reduktionsmittelmassenstrom als auch ein Umfang der NOₓ-Bildung während des Verbrennungsprozesses hängen stark von den während der Verbrennung herrschenden Gemischverhältnissen ab. In Phasen fetten oder stöchiometrischen Betriebs ist eine weitestgehend vollständige Umsetzung beim NOₓ gewährleistet. Wird allerdings in einen Magerbetrieb geschaltet, so wird wegen eines Sauerstoffüberschusses die NOₓ-Reduktion verringert. Da sich der Magerbetrieb als besonders verbrauchsgünstig erwiesen hat, aber eine hohe NOₓ-Emission aus umweltrelevanten Gründen vermieden werden soll, sind zur Abhilfe NOₓ-Speicherkomponenten entwickelt worden. Derartige Speicherkomponenten sorbieren in Phasen mageren Betriebs NOₓ und lagern dieses als Nitrat ein. Beim Wechsel in den fetten oder stöchiometrischen Betrieb erfolgt wieder eine Desorption des NOₓ. Die Katalysatorkomponente zur Reduktion des NOₓ und die Speicherkomponente können zu einem sogenannten NOₓ-Speicherkatalysator zusammengefasst werden.

Eine Speicherkapazität des NOₓ-Speicherkatalysators ist naturgemäß begrenzt. Daher muss ein derartiger Katalysator in regelmäßigen Abständen regeneriert werden. Die Regeneration erfolgt durch Wechsel in den stöchiometrischen oder fetten Betrieb, wobei das eingelagerte Nitrat wieder als NOₓ desorbiert und an der Katalysatorkomponente mit Hilfe der Reduktionsmittel zu Stickstoff reduziert wird.

Der Sorptions- und Desorptionsvorgang in die Speicherkomponente und die katalytische Umsetzung an der Katalysatorkomponente sind temperaturabhängig vgl z.B. Dokument US5722236A. Unter Umständen müssen daher motorische Regeleingriffe vorgenommen werden, um den NOₓ-Speicherkatalysator zu heizen oder abzukühlen. So schließt sich beispielsweise einem Kaltstart der Verbrennungskraftmaschine eine Aufheizphase an, da für den Sorptionsvorgang und die katalytische Zersetzungsreaktion eine Mindesttemperatur erforderlich ist. Während des Magerbetriebs soll die Katalysatortemperatur dagegen nicht über eine obere Grenztemperatur steigen, die im Wesentlichen durch die Desorptionstemperatur der Speicherkomponente bestimmt wird. Mit Erreichen der Desorptionstemperatur kann ansonsten eine nahezu schlagartige Freisetzung des eingespeicherten NOₓ erfolgen, ohne dass die zur Zersetzung notwendigen Reduktionsmittel bereitgestellt sind. Die obere Temperaturgrenze kann ferner die Temperaturabhängigkeit der katalytischen Aktivität der Katalysatorkomponente berücksichtigen sowie Schwellenwerte, ab denen mit einer thermischen Schädigung des NOₓ-Speicherkatalysators gerechnet werden kann. Alles in allem ist zur dauerhaften und sicheren Betriebsführung ein Temperaturmanagement im Bereich des NOₓ-Speicherkatalysators notwendig.

Zur Temperaturregulierung sind Verfahren entwickelt worden, bei denen dem Katalysator für den Magerbetrieb ein Katalysatortemperatur-Sollbereich vorgegeben wird. Es hat sich gezeigt, dass die obere und die untere Grenztemperatur für diesen Sollbereich mit zunehmender Gesamtbetriebsdauer korrigiert werden muss, da sich mit Alterung des NOₓ-Speicherkatalysators seine NOₓ-Speicherfähigkeit verschlechtert. Im Allgemeinen wird der Sollbereich, der eine weitestgehend einwandfreie Funktionalität des NOₓ-Speicherkatalysators gewährt, eingeschränkt. Dazu wird einerseits die obere Grenztemperatur herabgesetzt und andererseits die untere Grenztemperatur angehoben. Arbeitet beispielsweise ein NOₓ-Speicherkatalysator im frischen Zustand in einem Temperaturbereich von zirka 200 bis 500 °C mit Speicherwirkungsgraden größer 90 %, so wird dieser unkritische Temperaturbereich im Laufe der Zeit auf Temperaturen von 260 bis 400 °C beschränkt. Dies hat zur Folge, dass der Magerbetrieb bei Temperaturen außerhalb dieses Bereiches nicht mehr freigegeben wird und ein Verbrauch der Verbrennungskraftmaschine ansteigt.
Zur Vermeidung unnötiger Einschränkungen des Temperaturbereichs hat es sich als sinnvoll erwiesen, die NOₓ-Speicherfähigkeit laufend zu überwachen und sowohl die obere als auch die untere Grenztemperatur in beide Richtungen adaptionsfähig auszugestalten. Bisherige Verfahren weisen dabei allerdings zwei Nachteile auf. Zum einen werden minimal und maximal zulässige Magertemperaturen vorgegeben, die bei der Neufestlegung des Solltemperaturbereichs nicht überschritten werden dürfen. Ein solches starres System trägt aber nicht den tatsächlichen Gegebenheiten im NOₓ-Speicherkatalysator Rechnung und führt damit unter Umständen zu einem unnötigen Abbruch des Magerbetriebs. Zum anderen wird eine Adaption der Grenztemperaturen derart durchgeführt, dass diese um feste Schrittweiten erhöht beziehungsweise erniedrigt werden. Wird beispielsweise eine Verschlechterung der NOₓ-Speicherfähigkeit detektiert, so wird die obere Grenztemperatur um einen vorgegebenen Betrag gemindert. Unter Umständen kann eine solche Vorgehensweise dazu führen, dass einerseits der Magerbetrieb unnötig frühzeitig unterbrochen wird und andererseits eine zu hohe NOₓ-Emission aufgrund nicht optimaler Temperierung des NOₓ-Speicherkatalysators auftreten kann.

Aufgabe der vorliegenden Erfindung ist es daher, ein Verfahren zur Verfügung zu stellen, mit dem eine Adaption des Katalysatortemperatur-Sollbereichs wesentlich flexibler und unter Berücksichtigung der tatsächlichen Verhältnisse im NOₓ-Speicherkatalysator durchgeführt werden kann.

Erfindungsgemäß wird diese Aufgabe durch das Verfahren zur Adaption eines Katalysatortemperatur-Sollbereichs mit den im Anspruch 1 genannten Merkmalen gelöst. Dadurch, dass nach dem Verfahren
(a) durch ein Modell eine Soll-NOₓ-Speicherfähigkeit während eines Magerbetriebs ermittelt wird,
(b) eine Ist-NOₓ-Speicherfähigkeit durch einen stromab vom NOₓ-Speicherkatalysator angeordneten Gassensor überwacht wird,
(c) mit Erreichen eines Grenzwertes für die Ist-NOₓ-Speicherfähigkeit eine Regeneration des NOₓ-Speicherkatalysators eingeleitet wird,
(d) im Adaptionszeitpunkt eine Abweichung der Ist-NOₓ-Speicherfähigkeit von der Soll-NOₓ-Speicherfähigkeit bestimmt wird und
(e) in Abhängigkeit von Vorzeichen und/oder Umfang der Abweichung eine obere und/oder eine untere, Grenztemperatur für den Katalysatortemperatur-Sollbereich geändert wird,
(f) insbesondere erfolgt die Adaption während' des Magerbetriebs (NOₓ-Speicherphase) oder zum Zeitpunkt des Auslösens der Regeneration (Adaptionszeitpunkt),
können die in dem dynamischen Verkehr entstehenden Anforderungen an das Temperaturmanagement wesentlich flexibler erfüllt werden. '

Nach einer bevorzugten Ausgestaltung des Verfahrens wird einerseits, für den Fall, dass die Ist-NOₓ-Speicherfähigkeit kleiner ist als die Soll'-NOₓ-Speicherfähigkeit, eine Korrektur der oberen Grenztemperatur in Richtung niedrigerer Temperaturen und/oder eine Adaption der unteren Grenztemperatur in Richtung höherer Temperaturen durchgeführt. Ist die Ist-NOₓ-Speicherfähigkeit gleich oder größer als die Soll-NOₓ-Speicherfähigkeit, erfolgt eine Adaption mit umgekehrter Tendenz.

Ferner ist bevorzugt, dass der Umfang der Adaptionen in Abhängigkeit von einer Höhe der Abweichung der NOₓ-Speicherfähigkeit von der Soll-NOₓ-Speicherfähigkeit festgelegt wird. So kann beispielsweise bei sehr hohen Abweichungen auch ein entsprechend hoher Regeleingriff zur Sicherstellung eines optimalen Temperaturfensters erfolgen. Umgekehrt kann bei sehr geringen oder gar keinen Abweichungen auf einen Regeleingriff verzichtet oder dieser nur mit einem sehr geringen Umfang durchgeführt werden. Die Adaption kann vorzugsweise noch zusätzlich von Parametern, die die gegenwärtigen oder zukünftigen Verhältnisse im Bereich des NOₓ-Speicherkatalysators beeinflussen, abhängig gemacht werden. In Frage kommen dabei Parameter wie ein Abgasmassenstrom, eine Motordrehzahl, eine Motorlast, ein NOₓ-Massenstrom vor dem NOₓ-Speicherkatalysator, eine gespeicherte NOₓ-Masse zum Adaptionszeitpunkt oder eine aktuelle Katalysatortemperatur.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Anordnung eines NOₓ-Speicherkatalysators im Abgasstrang einer Verbrennungskraftmaschine und
- Figur 2: einen Verlauf einer oberen und unteren Grenztemperatur eines Katalysatortemperatur-Sollbereichs für einen Magerbetrieb.

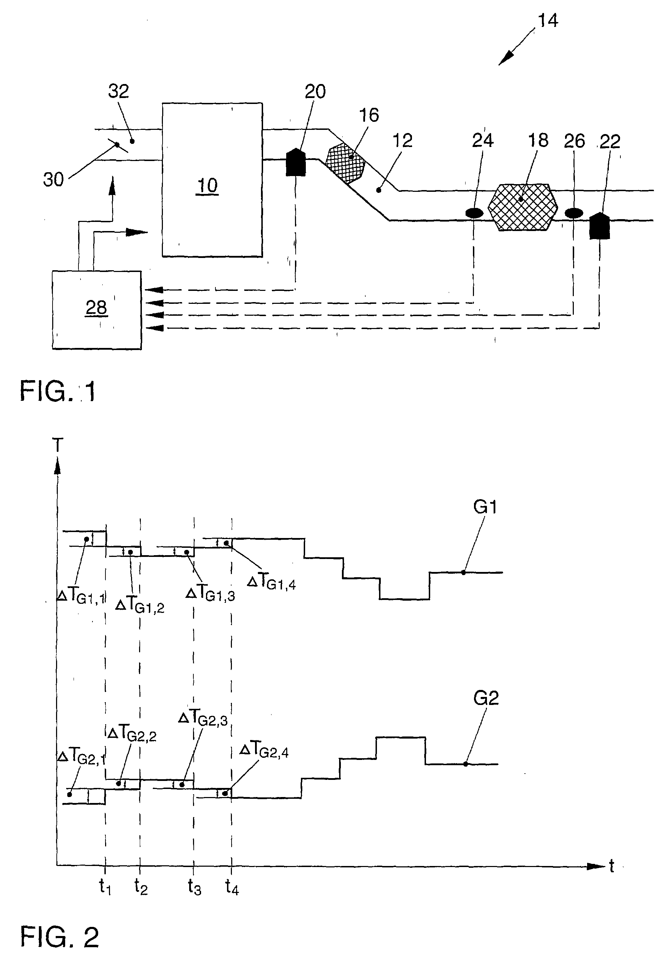

Die Figur 1 zeigt eine Verbrennungskraftmaschine 10, in deren Abgasstrang 12 ein Katalysatorsystem 14 zur Reinigung eines Abgases angeordnet ist. Das Katalysatorsystem 14 umfasst einen Vorkatalysator 16 sowie einen NOₓ-Speicherkatalysator 18. Ferner ist der Abgasstrang 12 mit einer Sensorik ausgestattet, die es erlaubt, Betriebsparameter in ausgewählten Bereichen unmittelbar zu erfassen. Beispielhaft sind dazu hier aufgeführt eine Lambdasohde 20, ein NOₓ-Sensor 22 sowie zwei Temperaturfühler 24, 26.

Die von der Sensorik bereitgestellten Signale werden in ein Motorsteuergerät 28 eingelesen und dort anhand hinterlegter Algorithmen bewertet. Über das Motorsteuergerät 28 kann dann ein Regeleingriff zur Änderung der während eines Verbrennungsvorganges der Verbrennungskraftmaschine 10 herrschende Verhältnisse erfolgen. Beispielhaft ist hier als Stellglied eine Drosselklappe 30 in einem Ansaugkanal 32 dargestellt. Über eine Änderung eines Drosselklappenwinkels kann dann ein Ansaugvolumen der Verbrennungskraftmaschine 10 beeinflusst werden. Verfahren und Vorrichtung zur Durchführung derartiger Regeleingriffe sind hinlänglich bekannt und werden daher an dieser Stelle nicht näher erläutert. Festzuhalten bleibt lediglich, dass auf diese Weise auch eine Temperatur im Abgasstrang 12, insbesondere eine Katalysatortemperatur des NOₓ-Speicherkatalysators 18, geregelt werden kann.

Der Figur 2 ist ein Sollbereich für die Katalysatortemperatur in einem Magerbetrieb der Verbrennungskraftmaschine 10 zu entnehmen. Der Sollbereich wird durch eine obere Grenztemperatur G1 und eine untere Grenztemperatur G2 definiert. Durch Vorgabe des Sollbereiches soll sichergestellt werden, dass optimale Bedingungen für eine Sorption von NOₓ in einer Speicherkomponente des NOₓ-Speicherkatalysators 18 und für eine katalytische Aktivität der Katalysatorkomponenten desselben herrschen. Liegt die mit Hilfe der Temperaturfühler 24, 26 ermittelte Katalysatortemperatur außerhalb des Sollbereichs, so erfolgt ein Wechsel in einen fetten oder stöchiometrischen Betrieb der Verbrennungskraftmaschine 10. Oberhalb und unterhalb des Sollbereichs wird ein Magerbetrieb der Verbrennungskraftmaschine 10 unterdrückt. Im nachfolgenden Verfahren werden die Grenztemperaturen G1 und G2 im Laufe der Zeit sich ändernden Bedingungen im Bereich des NOₓ-Speicherkatalysators 18 angepasst, mit der Prämisse, einerseits die NOₓ-Emission möglichst gering zu' halten und andererseits einen unnötigen Kraftstoffmehrverbrauch durch ein unnötig frühes Ende des Magerbetriebes zu vermeiden.

Zunächst wird eine Ist-NOₓ-Speicherfähigkeit durch einen stromauf vom NOₓ-Speicherkatalysator 18 angeordneten Gassensor hier dem NOₓ-Sensor 22-überwacht. Die NOₓ-Speicherfähigkeit kann anhand einer von dem NOₓ-Sensor 22 detektierten NOₓ-Konzentration oder NOₓ-Emission sowie der aktuellen Katalysatortemperatur bestimmt werden. Derartige Modelle sind dem Stand der Technik zu entnehmen. Darüber hinaus sind Modelle bekannt, mit denen eine Soll-NOₓ-Speicherfähigkeit während des Magerbetriebes prognostiziert werden kann. Eingangsgrößen, für derartige Modelle sind beispielsweise ein Ansaugvolumenstrom, eine Einspritzmenge, ein Einspritzwinkel, eine Verbrennungstemperatur und die Katalysatortemperatur. Auch hier kann auf bewährte Entwicklungen zurückgegriffen werden. Im Steuergerät 28 steht damit eine modellierte Soll-NOₓ-Speicherfähigkeit und eine auf Basis einer Messung ermittelte Ist-NOₓ-Speicherfähigkeit zu einem beliebigen Zeitpunkt zur Verfügung.

Eine Regenerationsnotwendigkeit des NOₓ-Speicherkatalysators 18 wird im Allgemeinen derart gesteuert, dass ein Grenzwert für die Ist-NOₓ-Speicherfähigkeit vorgegeben wird, mit dessen Erreichen die Regeneration zwingend erforderlich ist. Die Adaption erfolgt nun während der NOₓ-Speicherphase oder zum Zeitpunkt des Auslösens der Regeneration (Adaptionszeitpunkt tᵢ). Im Adaptionszeitpunkt tᵢ wird dazu die Ist- und die Soll-NOₓ-Speicherfähigkeit miteinander verglichen und eine Abweichung bestimmt. Exemplarisch sind insgesamt vier Adaptionszeitpunkte t₁ bis t₄ in der Figur 2 markiert worden.

Eine Korrektur des unteren und/oder oberen Grenzwertes G1, G2 erfolgt dann in Abhängigkeit vom Vorzeichen und Umfang der Abweichung. So ist hier beispielsweise zu den Adaptionszeitpunkten t₁, t₂ die Ist-NOₓ-Speicherfähigkeit kleiner als die Soll-NOₓ-Speicherfähigkeit. Das heißt, es wurde ein vorzeitiger NOₓ-Durchbruch detektiert und damit ist eine Tendenz des Reglungseingriffes für die obere Grenztemperatur G1 als auch für die unter Grenztemperatur G2 vorgegeben. So hat die Anpassung der oberen Grenztemperatur G1 in Richtung niedrigerer Temperaturen und die Anpassung der unteren Grenztemperatur G2 in Richtung höherer Temperaturen zu erfolgen. Ein Regelangriff mit umgekehrten Tendenzen liegt in den Adaptionszeitpunkten t₃ und t₄ vor.

Ein Umfang der Adaption, das heißt die Vorgabe eines Korrekturwertes ΔT_{G}, wird in Abhängigkeit von einer Höhe der Abweichung der Ist-NOₓ-Speicherfähigkeit von der ' Soll-NOₓ-Speicherfähigkeit festgelegt. Zusätzlich fließen in die Bestimmung, des Korrekturwertes ΔT_{Gi} Parameter ein, wie ein Abgasmassenstrom, eine Motordrehzahl, eine Motorlast, ein NOₓ-Massenstrom vor dem NOₓ-Speicherkatalysator 18, eine gespeicherte NOₓ-Masse zum Adaptionszeitpunkt oder eine aktuelle Katalysatortemperatur. Zu diesem Zweck lassen sich entsprechende Kennfelder beziehungsweise Kennlinien in dem Steuergerät 28 in geeigneter Form hinterlegen.

Zum Adaptionszeitpunkt t₁ wird auf diese Weise die obere Grenztemperatur G1 um den Korrekturwert ΔT_{G1,1} gemindert und die untere Grenztemperatur G2 um den Korrekturwert ΔT_{G2,1} erhöht. Die Adaption erfolgt demnach unter Berücksichtigung der tatsächlich im Bereich des NOₓ-Speicherkatalysators 18 herrschenden Bedingungen, so dass der Katalysatortemperatur-Sollbereich für eine sich anschließende erneute Magerbetriebsphase optimiert wurde. Die Adaption der Grenztemperaturen G1, G2 erfolgt in den anderen markierten Adaptionszeitpunkten t₂, t₃, t₄ in Analogie.

### BEZUGSZEICHENLISTE

- 10: Verbrennungskraftmaschine
- 12: Abgasstrang
- 14: Katalysatorsystem
- 16: Vorkatalysator
- 18: NOₓ-Speicherkatalysator
- 20: Lambdasonde
- 22: NOₓ-Sensor
- 24, 26: Temperaturfühler
- 28: Motorsteuergerät
- 30: Drosselklappe
- 32: Ansaugkanal
- tᵢ: Adaptionszeitpunkt
- G1: obere Grenztemperatur
- G2: untere Grenztemperatur
- ΔT_{Gi}: Korrekturwert

## Patentansprüche

1. Verfahren zur Adaption eines Katalysatortemperatur-Sollbereichs für einen im Abgasstrang einer Verbrennungskraftmaschine angeordneten und mit einem mageren Abgas beaufschlagten NOₓ-Speicherkatalysator (18), bei dem
(a) durch ein Modell eine Soll-NOₓ-Speicherfähigkeit während eines Magerbetriebs ermittelt wird,
(b) eine Ist-NOₓ-Speicherfähigkeit durch einen stromab vom NOₓ-Speicherkatalysator (18) angeordneten Gassensor (22) überwacht wird,
(c) mit Erreichen eines Grenzwertes für die ist-NOₓ-Speicherfähigkeit eine Regeneration des NOₓ-Speicherkatalysators (22) eingeleitet wird,
(d) eine Abweichung der Ist-NOₓ-Speicherfähigkeit von der Soll-NOₓ-Speicherfähigkeit bestimmt wird und
(e) in Abhängigkeit von Vorzeichen und/oder Umfang der Abweichung eine obere und/oder eine untere Grenztemperatur für den Katalysatortemperatur-Sollbereich geändert wird.

2. Verfahren nach Anspruch 1, **dadurch gekennzeichnet, dass**
- für den Fall, dass die Ist-NOₓ-Speicherfähigkeit kleiner ist als die Soll-NOₓ-Speicherfähigkeit eine Adaption der oberen Grenztemperatur (G1) in Richtung niedrigerer Temperaturen und/oder eine Adaption der unteren Grenztemperatur (G2) in Richtung höherer Temperaturen erfolgt und
- für den Fall, dass die Ist-NOₓ-Speicherfähigkeit gleich oder größer als die Soll-NOₓ-Speicherfähigkeit ist, eine Adaption der oberen Grenztemperatur (G1) in Richtung höherer Temperaturen und/oder eine Adaption der unteren Grenztemperatur (G2) in Richtung niedrigerer temperaturen erfolgt.

3. Verfahren, nach einem der Ansprüche 1 oder 2, **dadurch gekennzeichnet, dass** der Umfang der Adaption in Abhängigkeit von einer Höhe der Abweichung der Ist-NOₓ-Speicherfähigkeit von der Soll-NOₓ-Speicherfähigkeit festgelegt wird.

4. Verfahren nach Anspruch 3, **dadurch gekennzeichnet, dass** der Umfang der Adaption zusätzlich in Abhängigkeit von einem oder einer Kombination von Parametern, wie einem Abgasmassenstrom, einer Motordrehzahl, einer Motorlast, einem NOₓ-Massenstrom vor dem NOₓ-Speicherkatalysator (18), einer gespeicherten NOₓ-Masse zum Adaptionszeitpunkt oder einer aktuellen Katalysatortemperatur, festgelegt wird.

5. Verfahren nach einem der vorhergehenden Ansprüche, **dadurch gekennzeichnet, dass** die NOₓ-Speicherfähigkeit anhand der NOₓ-Konzentration oder der NOₓ-Emission stromab des NOₓ-Speicherkatalysators (18) und der aktuellen Katalysatortemperatur bestimmt wird.

6. Verfahren nach einem der vorhergehenden Ansprüche, **dadurch gekennzeichnet, dass** der Magerbetrieb der dem NOₓ-Speicherkatalysator (18) vorgeschalteten Verbrennungskraftmaschine (10) bei Katalysatortemperaturen außerhalb des Katalysatortemperatur-Sollbereichs unterdrückt wird.

## Claims

1. Method for adapting a desired catalytic converter temperature range for an NOₓ storage catalytic converter (18) which is arranged in the exhaust section of an internal combustion engine and is supplied with a lean exhaust gas, in which
(a) a desired NOₓ storage capacity during a lean-burn mode is determined by means of a model,
(b) an actual NOₓ storage capacity is monitored by a gas sensor (22) arranged downstream of the NOₓ storage catalytic converter (18),
(c) regeneration of the NOₓ storage catalytic converter (18) is initiated when a limit value for the actual NOₓ storage capacity is reached,
(d) a deviation in the actual NOₓ storage capacity from the desired NOₓ storage capacity is determined, and
(e) an upper limit temperature and/or a lower limit temperature for the desired catalytic converter temperature range is altered as a function of the sign and/or extent of the deviation.

2. Method according to Claim 1, **characterized in that**
- if the actual NOₓ storage capacity is lower than the desired NOₓ storage capacity, the upper limit temperature (G1) is adapted towards lower temperatures and/or the lower limit temperature (G2) is adapted towards higher temperatures, and
- if the actual NOₓ storage capacity is greater than or equal to the desired NOₓ storage capacity, the upper limit temperature (G1) is adapted towards higher temperatures and/or the lower limit temperature (G2) is adapted towards lower temperatures.

3. Method according to one of Claims 1 or 2, **characterized in that** the extent of the adaptation is defined as a function of a magnitude of the deviation of the actual NOₓ storage capacity from the desired NOₓ storage capacity.

4. Method according to Claim 3, **characterized in that** the extent of the adaptation is additionally defined as a function of one or a combination of parameters, such as an exhaust-gas mass flow rate, an engine speed, an engine load, an NOₓ mass flow rate upstream of the NOₓ storage catalytic converter (18), a stored NOₓ mass at the adaptation instant or a current catalytic converter temperature.

5. Method according to one of the preceding claims, **characterized in that** the NOₓ storage capacity is determined on the basis of the NOₓ concentration or the NOₓ emission downstream of the NOₓ storage catalytic converter (18) and the current catalytic converter temperature.

6. Method according to one of the preceding claims, **characterized in that** the lean-burn mode of the internal combustion engine (10) upstream of the NOₓ storage catalytic converter (18) is suppressed in the event of catalytic converter temperatures which lie outside the desired catalytic converter temperature range.

## Revendications

1. Procédé d'adaptation d'une gamme de température de consigne de catalyseur pour un catalyseur à accumulateur de NOₓ (18) disposé dans la ligne de gaz d'échappement d'un moteur à combustion et recevant un gaz d'échappement appauvri, et dans lequel
(a) une capacité d'accumulation de NOₓ de consigne est déterminée par un modèle pendant un fonctionnement en mode appauvri,
(b) une capacité d'accumulation de NOₓ réelle est surveillée par un détecteur de gaz (22) disposé en aval du catalyseur à accumulateur de NOₓ (18),
(c) à l'atteinte d'une valeur limite pour la capacité d'accumulation de NOₓ réelle, une régénération du catalyseur à accumulateur de NOₓ (18) est lancée,
(d) un écart entre la capacité d'accumulation de NOₓ réelle et la capacité d'accumulation de NOₓ de consigne est défini et
(e) une température limite supérieure et/ou une température limite inférieure pour la gamme de température de consigne du catalyseur est modifiée en fonction du signe et/ou de l'importance de l'écart.

2. Procédé selon la revendication 1, **caractérisé en ce que**
- pour le cas où la capacité d'accumulation de NOₓ réelle est inférieure à la capacité d'accumulation de NOₓ de consigne, une adaptation de la température limite supérieure (G1) a lieu en direction de températures plus basses et/ou une adaptation de la température limite inférieure (G2) a lieu en direction de températures plus élevées et
- pour le cas où la capacité d'accumulation de NOₓ réelle est supérieure ou égale à la capacité d'accumulation de NOₓ de consigne, une adaptation de la température limite supérieure (G1) a lieu en direction de températures plus élevées et/ou une adaptation de la température limite inférieure (G2) a lieu en direction de températures plus basses.

3. Procédé selon l'une quelconque des revendications 1 ou 2, **caractérisé en ce que** l'importance de l'adaptation est fixée en fonction d'un niveau de l'écart entre la capacité d'accumulation de NOₓ réelle et la capacité d'accumulation de NOₓ de consigne.

4. Procédé selon la revendication 3, **caractérisé en ce que** l'importance de l'adaptation est fixée en plus en fonction d'un paramètre ou d'une combinaison de paramètres, comme un flux volumique de gaz d'échappement, un régime du moteur, une charge du moteur, un flux volumique de NOₓ devant le catalyseur à accumulateur de NOₓ (18), une masse de NOₓ accumulée au moment de l'adaptation ou une température de catalyseur actuelle.

5. Procédé selon l'une quelconque des revendications précédentes, **caractérisé en ce que** la capacité d'accumulation de NOₓ est définie en se basant sur la concentration de NOₓ ou l'émission de NOₓ en aval du catalyseur à accumulateur de NOₓ (18) et de la température de catalyseur actuelle.

6. Procédé selon l'une quelconque des revendications précédentes, **caractérisé en ce que** le fonctionnement en mode appauvri du moteur à combustion (10) installé en amont du catalyseur à accumulateur de NOₓ (18) est diminué à des températures du catalyseur se situant en dehors de la gamme de température de consigne du catalyseur.
